# EUROPEAN PATENT APPLICATION

(11) **EP 0 620 677 A1**
(43) Date of publication of application: **19.10.1994**
(21) Application number: 94200971.3
(22) Date of filing: 11.04.1994
(51) Int. Cl.: H04N 1/40

(54) **Frequency modulation halftone screen and method for making same**

(30) Priority: 16.04.1993 EP 93201113; 05.08.1993 US 102572
(71) Applicant: AGFA-GEVAERT naamloze vennootschap, B-2640 Mortsel (BE)
(72) Inventor: Delabastita, Paul, c/o Agfa-Gevaert N.V., B-2640 Mortsel (BE)

(57) **Abstract**

A halftone screen and method in which the processing order of unprocessed image pixels of a continuous tone image is performed according to a randomized, space-filling, two-dimensional curve. The randomized, space-filling, two-dimensional curve can be a fractal curve. The curve can have different tone dependencies. The halftoning processing can involve an error diffusion algorithm.

## Description

### 1. Field of the invention.

A number of reproduction methods are only capable of reproducing a small number of image tones. For example, offset printing or electrophotographic printing methods are only capable of printing two tone values i.e. deposit ink or toner or not. In order to reproduce images having continuous tones, a halftoning or screening technique is used.

A halftoning technique converts a density value into a geometric distribution of binary dots that can be printed. The eye is not capable of seeing the individual halftone dots, and only sees the corresponding "spatially integrated" density value.

Two main classes of halftoning techniques have been described for use in the graphic arts field. These two techniques are known as "amplitude modulation screening" and "frequency modulation screening".

According to amplitude modulation screening, the halftone dots, that together give the impression of a particular tone, are arranged on a fixed geometric grid. By varying the size of the halftone dots the different tones of an image can be simulated. Consequently this technique can also be called "dot size modulation screening".

According to frequency modulation screening, the distance between the halftone dots is modulated rather than their size. This technique, although well known in the field of low resolution plain paper printers, has not obtained much attention for offset printing and other high end printing methods, probably because of the disadvantages to be discussed further on.

Both classes of halftone techniques are used in combination with a digital film recorder. A typical digital film recorder consists of a scanning laser beam exposing a photosensitive material at high resolution. The "grid" that defines the resolution at which the laser beam can be switched ON or OFF, usually has a pitch in the range of 1/1800 of an inch. The photosensitive material can be a photographic film, from which later on a printing plate is prepared by means of photomechanical techniques. The smallest addressable unit on a recorder is often called a "micro dot", "recorder element", or "rel".

The two classes of halftoning techniques, each with some of their variants, will now be reviewed, and their advantages and disadvantages will be discussed. The most important characteristics of a screening or halftoning technique for faithfully reproducing a continuous tone image include :
1) The rendering characteristics, more specifically the ability to render spatial detail in the original image content without the introduction of artifacts like moiré, textures and noise, as well as the ability to render a full range of tones.
2) The photomechanical characteristics of the halftone dots produced by the algorithm. These characteristics determine how consistently halftone dots can be recorded, copied, or duplicated in the different steps of the photomechanical preparation of the printing plates.
3) The behaviour of the halftones on an offset printing press.
4) The speed performance that can be achieved with the technique.

Amplitude modulation screening has as its major advantages that it can be easily implemented as a fast algorithm for electronic screening of an image, and that it has good photomechanical reproduction characteristics. However an important disadvantage of amplitude modulation screening is the fact that unwanted patterns within the halftoned image may occur. Depending on their origin, these patterns are called subject moiré, color moiré and internal moiré.

Subject moiré results from the geometric interaction between periodical components in the original subject matter, and the halftone screen itself. For an easy understanding of this problem, it is convenient to use the Fourier transform. An analysis is done in the article "Fourier Spectrum of Halftone Images", by D. Kermisch and P.G. Roeteling in the Journal of the Optical Society of America, Vol. 65, no. 6, 1975, pp. 716-720.

Solutions to reduce subject moiré are disclosed in e.g. US 5,130,821, EP 369,302 and EP 488,324. However these solutions do not completely solve the problem.

Color moiré results from interferences between the halftones of the different color separations of the image. To reduce this problem the use of screen angles for the different color separations that are shifted by 60° with respect to each other has been suggested. Several disclosures relate to the problem of generating screens with these angles or close approximations thereof. See for example US 4,419,690, US 4,350,996, US 4,924,301 and US 5,155,599. Use of other combinations of angles, frequencies or relative phases of the halftone dot patterns for the different color separations has also been suggested as a means to overcome the problem of color moiré. See for example US 4,443,060, US 4,537,470 and EP 501,126.

Internal moiré are patterns resulting from the geometric pattern of the addressable grid on which the halftones are generated. Methods to reduce internal moiré are usually based on the introduction of a random element that beaks up or "smears" the phase error that periodically builds up as a consequence of the frequency and angle relation between the halftone screen and the addressable grid on which it is rendered. Examples of such techniques are disclosed in US 4,456,924, US 4,499,489, US 4,700,235, US 4,918,622, US 5,150,428 and WO 90/04898.

None of the variants of the dot size modulation screening are capable of completely eliminating the moiré problems, and dot frequency modulation screening techniques have therefore been suggested to reduce the problem further. Various dot frequency modulation screening techniques have been disclosed and they can be divided into the following subclasses :
1) Point-to-point thresholding based techniques;
2) Error Diffusion along a line by line, column by column scan (and variations);
3) Error Propagation along a Hilbert scan (and variations); and,
4) Special techniques, such as that disclosed in DE 29,31,092, and further developed in 4,485,397.

The most representative technique of point-to-point thresholding is the halftoning based on the "Bayer" dither matrix : Bayer, B.E., "An optimum method for two level rendition of continuous-tone pictures", Proc. IEEE International Conference on Communications, Conference Record, pp. (26-11), (26-15), 1973. This Bayer dither matrix has a size that is a power of two, and contains threshold values that are arranged in such a fashion that, when thresholded against increasing levels of density, every halftone dot is "as far away as possible" from the halftone dots that are used to render the lower density levels. A number of variations on the ordering of the threshold values in the matrix exist, which are known under the names of the "Lippel and Kurland", and the "Jarvis" dither matrix (Stoffels, J.C., Moreland J.F., "A survey of Electronic Techniques for Pictorial Reproduction", IEEE Transactions on Communications, Vol. COM-29, No. 12, Dec. 1981, pp. 1898-1925).

Another point-to-point thresholding technique uses a "Blue Noise Mask" instead of a Bayer dither matrix. It is described in US 5,111,310. The Blue Noise Mask is the result of an optimization (filtering) of a non-deterministic randomized mask performed iteratively (for the subsequent threshold "layers") on the Fourier transform of the threshold matrix.

The halftone dot patterns produced by the Bayer dither matrix contain strong periodical components, visible as "texture", and the corresponding power spectrums are explicitly "spiky". This can potentially create moiré problems similar to the dot-size modulation algorithms. However, because the energy of the periodical dither components are much more evenly "spread" over the different harmonics, and because most of them have a relatively high frequency, compared to the dot-size modulation, the aliasing that will occur is much less disturbing.

The "Blue Noise Mask" threshold matrix produces distributions of halftone dots of which the two dimensional power spectrum is "continuous", rather than "spiky". This method is therefore free of the aliasing problems that occur with the dot-size modulation methods or with the Bayer dither matrix.

The continuous character of the power spectrum of the Blue Noise Mask technique suggests already that at least some energy is also present in the very low frequency bands of the spectrum. This energy at low (visible) frequencies is one of the reasons why tints rendered with this technique may appear "grainy". The relation between "graininess" and the shape of the frequency spectrum is extensively discussed by Ulichney Robert, "Digital Halftoning", MIT Press Cambridge Massachusetts, 1987, ISBN 0-262-21009-6.

The Bayer dither matrix halftones do not behave very well on an offset press. The gradation curve is "bumpy" and strongly dependent on how the press is run, especially in the tone range where the halftone dots start to connect. The problems are the same as with dot-size modulation halftones with extremely high rulings.

The "Blue Noise Mask" halftones behave much better. The range over which the halftone dots connect is spread along the whole tone scale, and although the press gain is high, it is stable and easy to control. The metaphor to see the "Blue Noise Mask" technique as a method of using a continuous range of screen rulings, all at the same time, helps to understand this.

All point-to-point thresholding techniques share the advantage that, once the threshold matrices have been calculated, the actual halftoning process is as fast as the fastest forms of dot-size modulation techniques. However, they also share the limitation that halftone dot distributions at higher density values have to be built "on top of" the distributions at lower density values. This makes it impossible to optimize the halftone dot distributions at each individual density level.

Perhaps the best known of all "Dot frequency modulation" techniques is the error diffusion algorithm. Images are processed line by line, column by column, and the error that occurs as a result of the binarization (or, in a more general context, the quantization) of the image data during the rendering is "diffused" to one or more of the unprocessed pixels. Depending on exactly how this error is diffused (to how many pixels and with which weights) a number of algorithms can be distinguished that usually have adopted the names of their inventors. Best known is the Floyd and Steinberg algorithm (Floyd, R.W., and L. Steinberg, "An Adaptive Algorithm for Spatial Greyscale", Proc. SID, vol. 17/2, pp. 75-77), but also the Jarvis, Judice and Ninke filter (Jarvis, J.F., C.N. Judice, and W.H. Ninke (1976) "A New Technique for Displaying Continuous Tone Pictures on Bilevel Display", IEEE Tran. on Commun., vol. COM-24, pp. 891-898), the Stucki filter (Stucki, P. (1979), "MECCA, a Multiple Error-Correcting Computation Algorithm for Bilevel Hardcopy Reproduction", Research Report RZ1060, IBM Research Laboratory, Zurich, Switzerland), and the Stevenson and Arce (Stevenson, R.L. and G.R. Arce (1985), "Binary Display of Hexagonally-Sampled Continuous Tone Images", J. Opt. Soc. Am., Vol. 2, no. 7, pp. 1009-1013) should be mentioned.

There exist numerous variations on the basic error diffusion algorithms. A simple variation consists of processing the pixels according to a "serpentine" sequence : the direction of error diffusion is from left to right for the "even" lines, and from right to left for the "odd" lines (or vice versa). Ulichney (Ulichney Robert, "Digital Halftoning", MIT Press Cambridge Massachusetts, 1987, ISBN 0-262-21009-6) describes the use of error diffusion in combination with randomly varied weights as a method to reduce the "worm like" textures that can occur around the 50 % tint level. In one variation the error diffusion utilizes a single, randomly selected, weight. In this variation the error is distributed to only one of the unprocessed pixels, which is randomly selected in the close neighbourhood of the pixel being processed.

Instead of perturbing the weights, it is also possible to perturb the threshold against which the pixel values are compared for the binarization. Other methods to reduce the worm-like effects are also disclosed in US 5,130,823 and US 5,150,429.

In US 5,130,819 the error that is diffused is the error as averaged over a small area of already processed pixels, instead of the local error at only one pixel position.

Because the error diffusion techniques are designed to minimize both the local and the global error between the original image content and the halftone, they have superior rendering characteristics when compared with the thresholding based frequency modulation techniques. Detail rendition is excellent, and tints look less grainy. In some cases however, a form of "edge enhancement" is introduced as an unintended visual artifact.

The printing characteristics of the standard error diffusion techniques are not very desirable. This can be explained by means of the relation between total dot circumference versus integrated dot area for the Floyd and Steinberg algorithm. At low densities, the individual halftone dots are disconnected, and the dot circumference increases proportionally with the number of dots and the integrated dot area. At a certain tint, the halftone dots start to connect, and the total dot circumference increases less than proportionally with the integrated dot area. Around 50 % however, the algorithm produces checkerboard-like patterns of which circumference is very low with respect to the integrated dot area. Above 50 %, the same behaviour is symmetrically repeated. The transition from a more disconnected to a highly ordered halftone dot distribution around 50 % results in irregularities in the press gain, that are highly affected by the press settings, and can result in gradation and neutral balance instability. The situation is in that regard better for the variations on the standard error diffusion algorithm that suppress the tendency to produce textures around the 50 % tint level.

The need for calculation and diffusion of error in the class of error diffusion techniques make them inherently slower than the dot-size modulation and the point-to-point thresholding based techniques described above. The error diffusion techniques with more weights are slower than the ones with less weights.

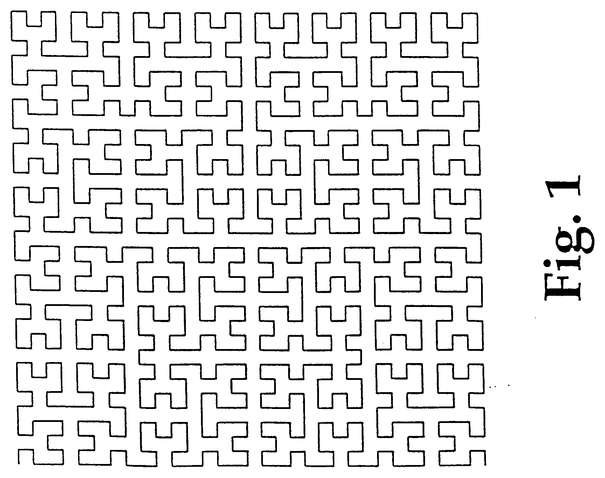

All of the above error diffusion algorithms have in common that the order of processing the pixels is straightforward; from left to right or vice versa, and from top to bottom or vice versa. A different approach was taken by Witten and Neal in their article (Witten Ian H., and Radford M. Neal, "Using Peano Curves for Bilevel Display of Continuous-Tone Images", IEEE CG & A, May 1982, pp. 47-52). The subject of their invention was to change the ordering itself of the pixel processing : In their method, the error is always propagated from the previous to the next pixel in an order following the path of what had been known under the name of the "Peano Curve". As suggested in "Digital Halftoning with Space Filling Curves", Luiz Velho, Jonas de Miranda Gomes, ACM Computer Graphics, Vol. 25, no. 4, 1991, other curves can also be used, like for example the "Hilbert Curve" shown in Fig. 1. All of these curves share the property that they are "space-filling deterministic fractal curves".

The rendering characteristics of the Hilbert and Peano scan methods are comparable to those of the Floyd and Steinberg algorithm, but the speed which can be achieved is faster than the fastest error diffusion algorithm (the one with one weight), because there is no need to store the sum of the propagated error with the value of the next in order pixel. Instead, this sum can immediately be used to determine the halftone value, after which a new error is calculated. High achievable speed makes the error propagation algorithm very attractive for processing of high resolution images.

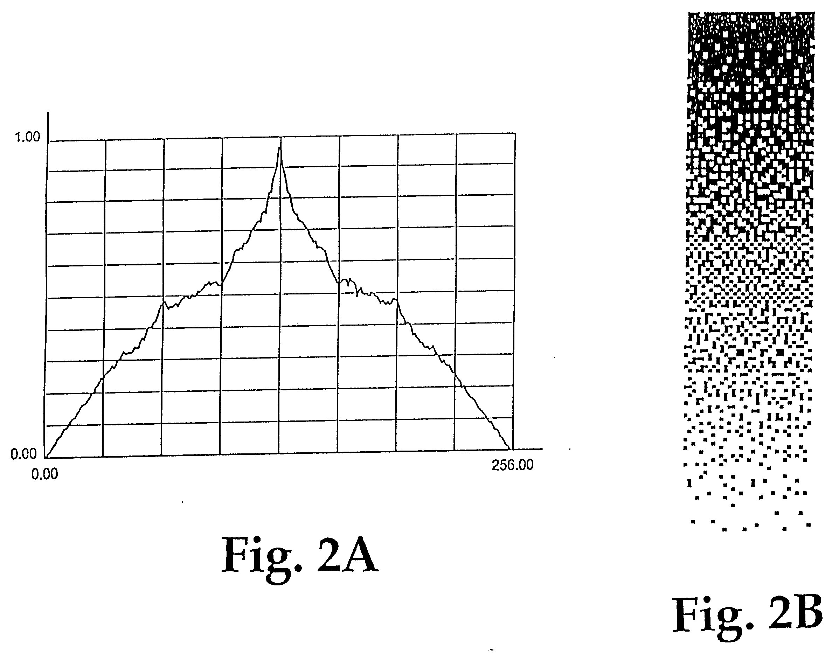

Unfortunately, the Hilbert and Peano algorithms suffer from the same problem as the Floyd and Steinberg algorithms in that they have a tendency to produce strong patterns and textures at certain integrated dot areas. As Fig. 2A shows, the appearance of these textures causes the dot circumference to change irregularly along the tone scale, causing instabilities in gradation and neutral balance when these tints are printed on an offset press.

### OBJECT OF THE INVENTION

It is accordingly a general object of the invention to provide an improved halftone screen and method for screening a continuous tone image using a frequency modulation screening technique.

It is a specific object of the invention to provide a halftone screen and method for screening a continuous tone image using a frequency modulation technique for output to recording devices, without the appearance of unwanted patterns or textures, instabilities in tonal gradation, or other effects commonly associated with the frequency-modulation techniques described in the pior art.

It is a further object of the invention to provide a method for screening a continuous tone image, using frequency modulation techniques, which is computationally as efficient as methods achieving equivalent output quality using dot modulation techniques.

### SUMMARY OF THE INVENTION

A halftone screen and method for generating an improved halftone screen using frequency modulation techniques are described. As an aid to understanding the discussion to follow, the terms defined herein apply to the entire specification and claims, and are indicated by capitalization. The term ERROR-DISPERSION PROCESSING shall means the steps of :
1. Determining, from the tone value of at least one unprocessed image pixel in a continuous tone image, a reproduction value to be used for recording said at least one unprocessed pixel on a recording medium;
2. Calculating a quantization error value on the basis of the difference between the tone value of said at least one unprocessed image pixel and its reproduction value, said at least one unprocessed image pixel thereby becoming a processed image pixel; and,
3. Adding at least a portion of said quantization error value to at least one unprocessed image pixel in said continuous tone image.

The term ERROR-DISPERSION-PROCESSED IMAGE PIXEL shall mean an image pixel in a continuous tone image that has been processed by ERROR-DISPERSION PROCESSING. The term RANDOMIZED, SPACE-FILLING, TWO-DIMENSIONAL CURVE shall mean a two dimensional curve that connects the image pixels and that in principal is deterministic but in which the deterministic character of the curve is broken up by randomizing the curve at two or more points.

With the above definitions in mind, the invention can be summarized as a method for halftone screening a continuous tone image comprising the steps of :
1. Selecting an unprocessed image pixel in said continuous tone image according to a RANDOMIZED, SPACE-FILLING, TWO-DIMENSIONAL CURVE;
2. ERROR-DISPERSION PROCESSING said unprocessed image pixel; and,
3. Repeating steps (1) and (2) above until all image pixels in said continuous tone image have been processed
and the resulting halftone screen itself.

According to the method in connection with the present invention, the pixels of a contone image are halftoned sequentially in an order which is described by a RANDOMIZED, SPACE-FILLING, TWO-DIMENSIONAL CURVE. The halftoning of a pixel in the order is achieved by determining the halftone value that approximates best the contone pixel value, calculating the difference between the contone and the halftone value, and adding at least a portion of that quantization error to one or more of the pixels that are next in order. It will be appreciated that the RANDOMIZED, SPACE-FILLING, TWO-DIMENSIONAL CURVE can be specified such as to make it tone-dependent with respect to the unprocessed and/or processed image pixels. Furthermore, before randomization, the "curve" can comprise different deterministic curve segments. Finally, after rasterization, the RANDOMIZED, SPACE-FILLING, TWO-DIMENSIONAL CURVE can have different tone dependencies within different portions of the curve.

ERROR-DISPERSION PROCESSING achieves rendering quality comparable to that of the known error diffusion or propagation algorithms. In the case of a RANDOMIZED, SPACE-FILLING, TWO-DIMENSIONAL CURVE, the randomized nature of the path of pixel processing avoids the occurrence of patterns and textures that deteriorate the printability of the halftones. If the error is only added to the next pixel in order of halftoning, a level of performance can be achieved that equals that of the error propagation along the Peano scan.

A RANDOMIZED, SPACE-FILLING, TWO-DIMENSIONAL CURVE can be obtained in a number of ways. For example, the image pixels can be processed by selecting each pixel at random each time a new unprocessed pixel needs to be selected.

An alternative method for pixel selection is described by a SPACE-FILLING, TWO-DIMENSIONAL DETERMINISTIC FRACTAL CURVE, such as the Hilbert curve or Peano curve, which is randomized at certain points to break up its deterministic structure.

### BRIEF DESCRIPTION OF THE DRAWINGS

The present invention is illustrated by way of example and without the intention to limit the invention thereto with the following drawings :
Fig. 1 shows the Hilbert curve.
Fig. 2A shows the dot circumference versus the tone value (0 = minimum density, 256 = maximum density) for a halftoning wherein the pixels are processed in the order of the Hilbert curve.
Fig. 2B shows a halftoned tone scale obtained by processing the image pixels in the order described by the Hilbert curve.
Fig. 3 shows a schematic representation of a circuit for implementing a halftoning method according to the invention.
Fig. 4 shows a schematic representation of a circuit for processing an image in bands.
Fig. 5A shows a randomized Hilbert curve.
Fig. 5B shows the dot circumference versus the tone value (0 = minimum density, 256 = maximum density) for a halftoning wherein the pixels are processed in the order of a randomized Hilbert curve.
Fig. 5C shows a halftoned tone scale obtained by processing the image pixels in the order described by a randomized Hilbert curve.
Fig. 6 shows a schematic representation of a circuit for implementing a halftoning method according to the invention wherein a weighted average of the difference between the tone value of at least two image pixels and their corresponding reproduction values is dispersed over a number of pixels.

### DETAILED DESCRIPTION OF THE INVENTION

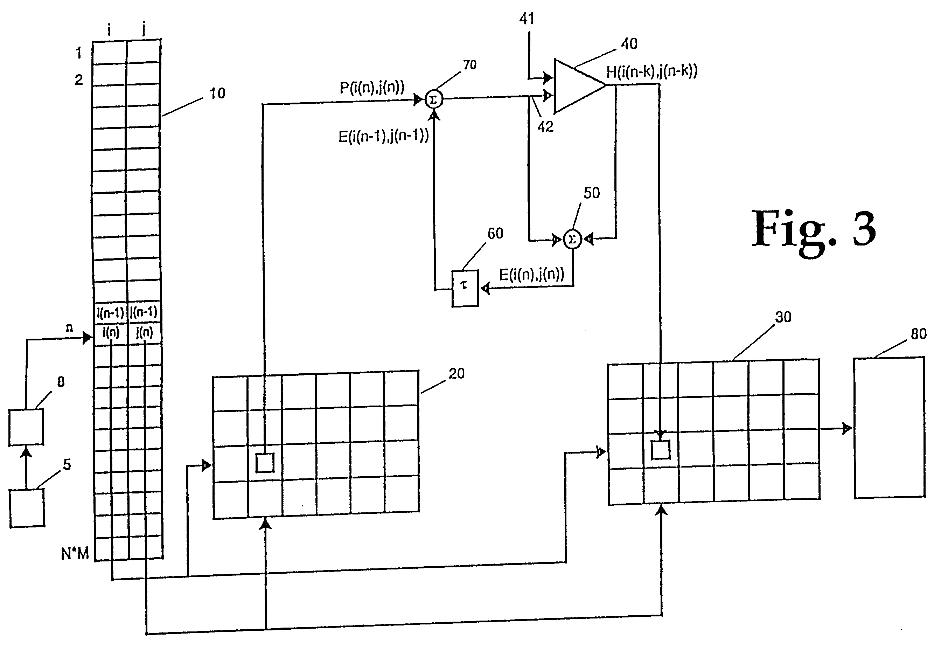

The invention will now be illustrated by the following embodiment, without the intention however to limit the invention thereto. Fig. 3 shows a circuit to perform the new halftoning technology in combination with a binary recording device. First the different building blocks of this circuit are described, later on its operation will be explained. Block 20 is a memory block containing the contone pixel values of an image. Typically these are 8-bit values, organized as N lines with M columns. Block 30 is a memory block with the same layout as block 20, in which the halftoned pixel values will be stored. In the case of a binary recording device, every halftoned pixel word has a length of 1 bit. Block 80 is a device capable of recording the information in block 30 on a substrate. Block 70 is an arithmetic unit capable of calculating the sum of the pixel value P(i, j) and the error E at the output of a delay register 60. The conversion of a contone pixel value into a halftoned pixel value takes place in block 40. This conversion is based on a thresholding operation : if the contone value at point (i, j) is below the value of 128, a value "0" is stored in the halftone memory, otherwise a "1" is stored. Block 50 contains an arithmetic unit that is capable of calculating the error between the original contone value at point 42, (i.e., the sum of the original contone value and the error), and the halftoned pixel value, and to store it in the delay register 60. Block 8 is a counter that sequences the processing of the N*M pixels of the image. Block 10 is a lockup table (LUT) with N*M entries (one for every image pixel), and a unique combination of a row and column address that corresponds to one pixel position in the image. Two methods to calculated such a table are given later. Block 5 is a clock.

The operation of the diagram is now explained. At every clock pulse, the counter 8 is incremented, and a new pair of coordinates (i(n)) is obtained from block 10. These coordinates are used as address values to the pixel memory 20, to obtain a contone pixel value P(i(n), j(n)). This pixel value is immediately added to the error E(i(n-1), j(n-1)) that was stored in register 60 after the previous halftone step, and the sum of both is compared to the threshold value 41 in block 40. The outcome of the thresholding operation determines the value H(i(n), j(n)) that will be written into the halftone pixel memory at position (i(n), j(n)). At the same time a new error E(i(n), j(n)) is calculated from the difference between P(i(n), j(n)) and H(i(n), j(n)), and stored in the delay register 60. The circuit is initialized by setting the counter 8 to 1, the error to 128, and the operation is terminated when the counter reaches the level N*M. After that, the halftone memory 30 is read out line by line, column by column, and its contents are recorded on a substrate by the recorder 80.

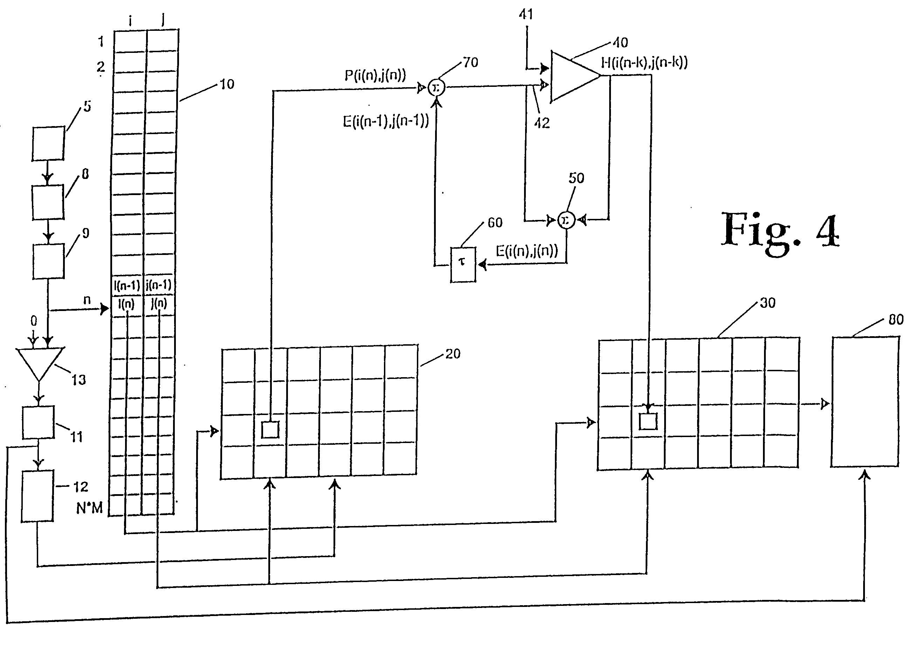

The circuit in Fig. 3 requires large amounts of memory : enough memory is needed to contain the entire contone image, the entire halftoned image, as well a LUT with N*M entries containing the sequence of address values to control the order of pixel processing. An alternative implementation is therefore disclosed that requires less memory. The reduction of memory requirements is obtained by subdividing the image into bands that are processed and recorded one by one. Fig. 4 shows the diagram for the case of bands with 4 lines.

The circuit of Fig. 4 is an extension of the circuit of Fig. 3. In the circuit of Fig. 4 however the pixel memory block 20 and the halftone memory block 30 contain only 4 lines of image data. Correspondingly, the LUT 10 contains only coordinate pairs for 4*M data entries. In between the pixel counter 8 and the addressing of LUT 10 is placed a modulo 4*M arithmetic unit 9. Block 11 moves image data from a mass storage unit 12, e.g., a hard disk, to pixel memory 20. Block 11 also contains a detector 13 that signals when the output of arithmetic unit 9 equals 0.

The operation of the circuit in Fig. 4 is as follows. When the output of arithmetic unit 9 is 0, block 11 moves 4 lines of image data from mass storage 12 to pixel memory 20. These 4*M pixels may then be halftoned according to the method of the present invention. After 4*M clock pulses a new set of 4 lines of image pixels will be moved from mass storage 12 to pixel memory 20. The 4*M halftoned pixels contained in memory 30 are also recorded on a substrate by recording unit 80.

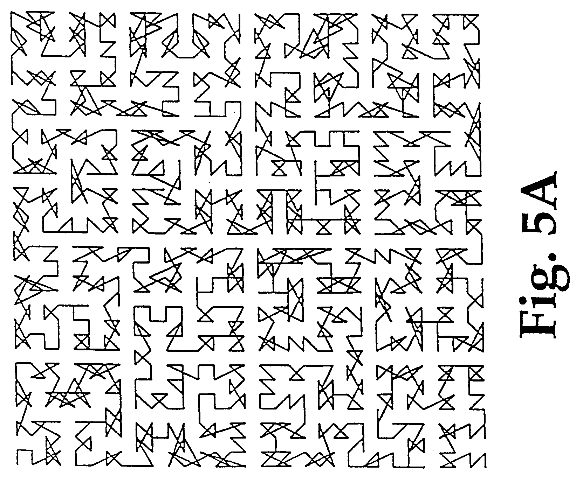

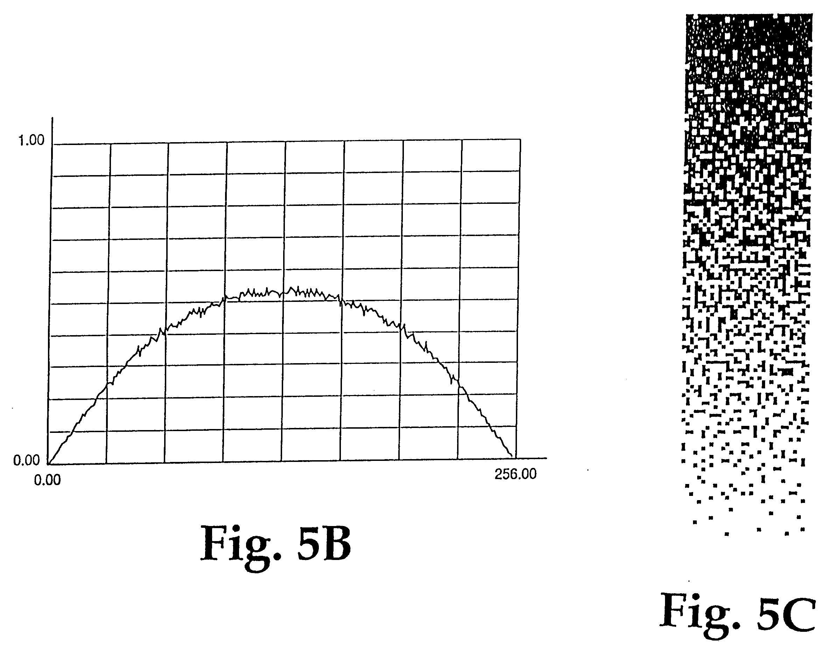

A method is presented now to obtain the contents of block 10 in Fig. 3. The method is based on the randomization of the Hilbert path. A Hilbert path is a two dimensional "fractal" curve, that can be obtained by means of a recursive program. Fig. 1 shows a few recursions of a process that generates a 32 by 32 Points Hilbert path. Part of a C program that can be used to obtain such a path is shown hereafter. 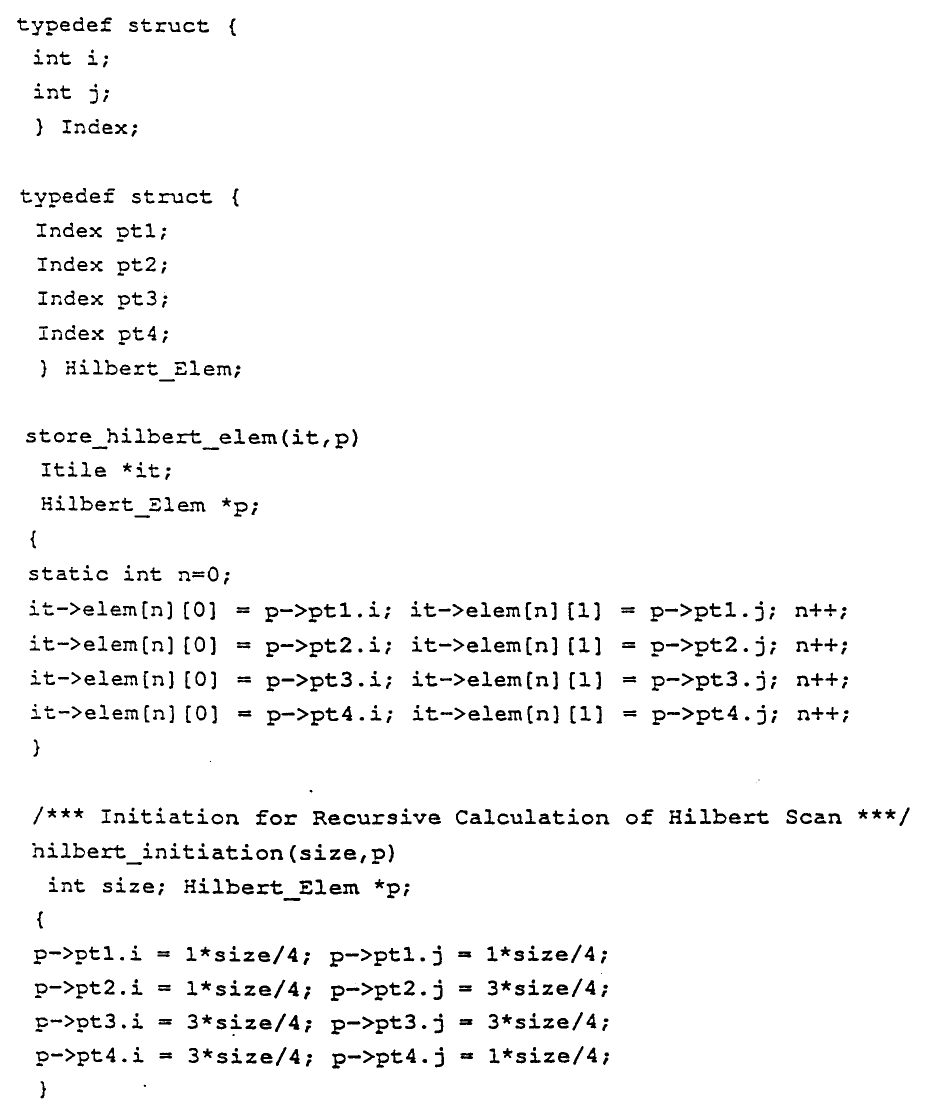 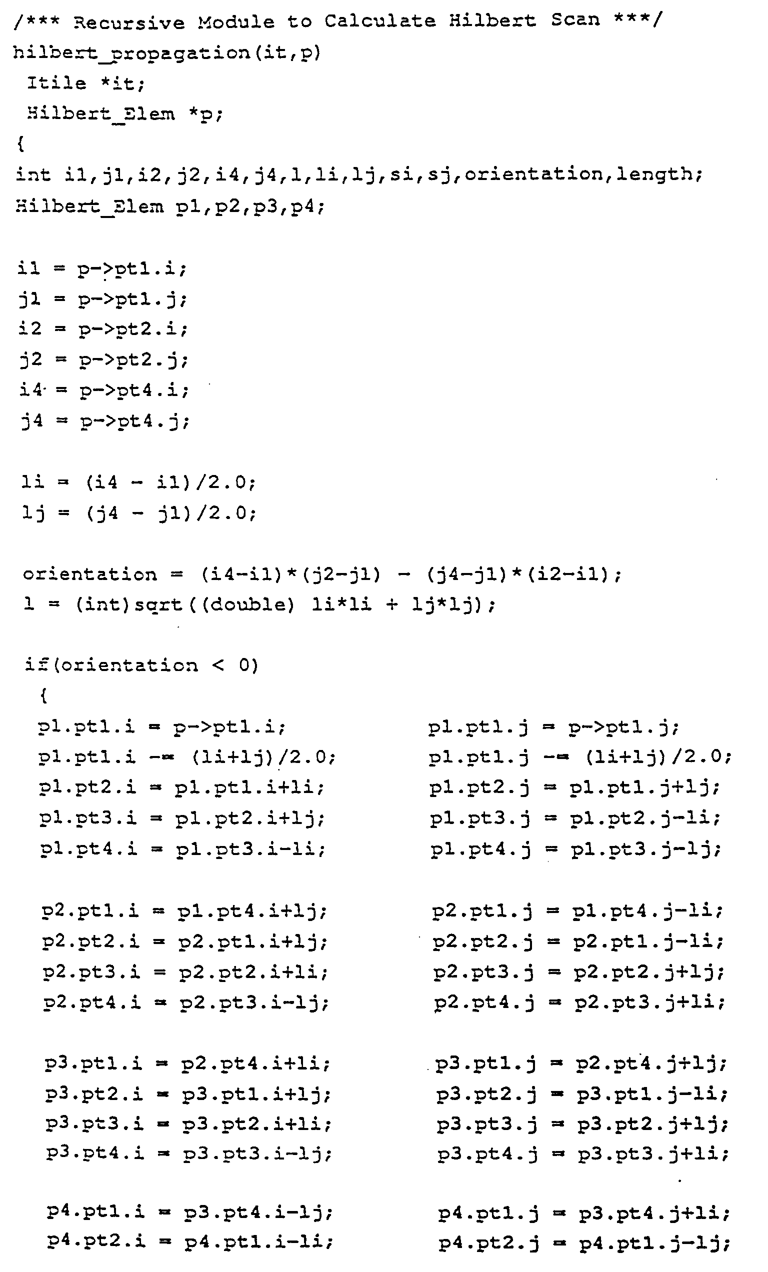 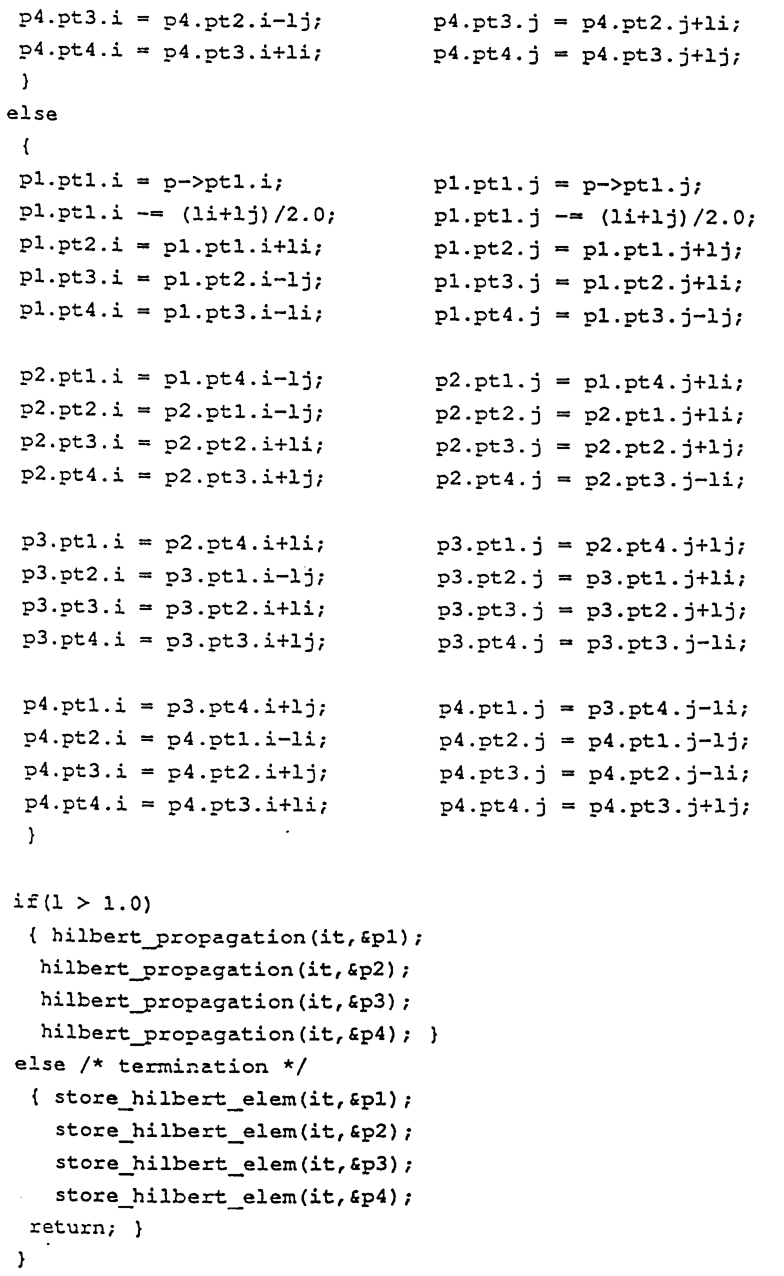 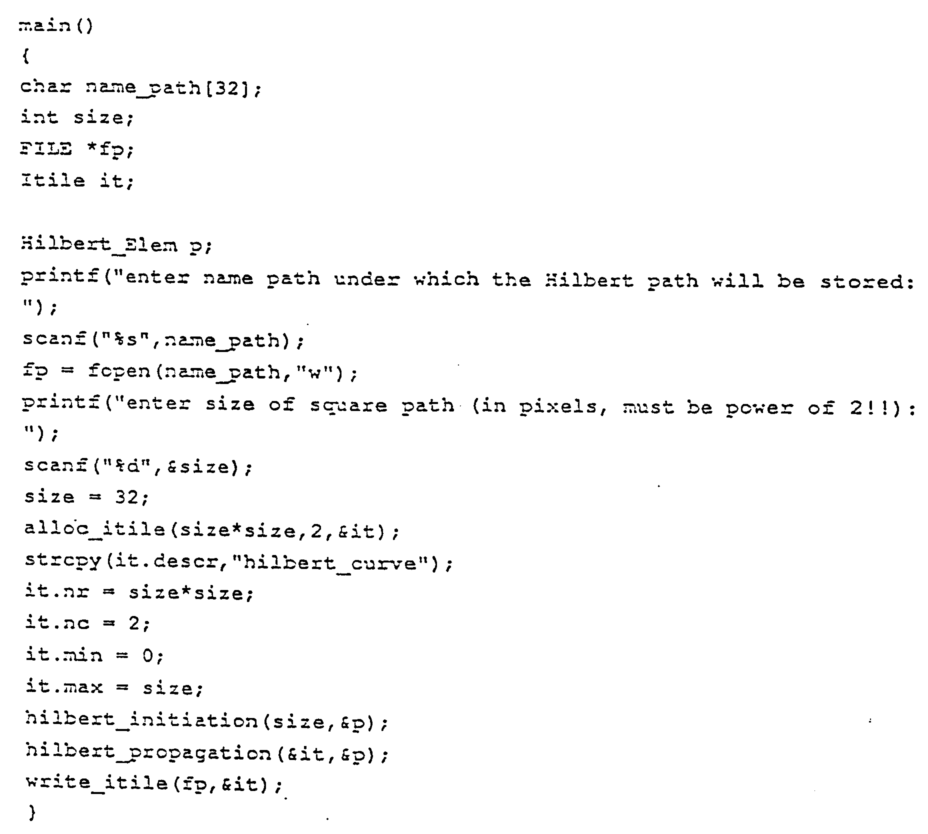
The randomization of this path is straightforward : the path is gone through point by point, and at every point of the path is decided at random whether or not to permute the current and the next point. This randomization process can be carried out once or more often. Fig. 5A shows a Hilbert curve after randomization. Fig. 5B shows the total circumference versus the integrated dot area plot that is obtained from a two times randomized Hilbert scan. Compared to Fig. 2, the plot looks very smooth, with no peaks around the 50 % tint level. Fig. 5C shows that no textures or patterning occurs along the tone scale.

The above method to obtain a path was implicitly formulated to create paths for square images or image parts. In most practical situations, however, images have a rectangular shape. Three solutions are open to adjust for this : In a first solution, the original contone image is "padded" with "white" values along its longest side, until it is made square. In a second approach, a path is calculated with the size of the longest side of the rectangular image. The points of the path that do not correspond to image pixel positions are simply skipped as the path is traversed. In a third solution, the image is divided into square parts of, for example 16x16 elements. A randomized path is obtained for one of these square parts using the above method. After that, the paths are connected together. This method still requires that the image dimensions be a multiple of the dimensions of the square parts, but, since these squares can be relatively small (16x16 in our example), this poses no real limitation.

It is clear that many variations exist on the schemes that were presented here. In one such variation, the binary-level processing can be replaced by multiple-level recording techniques. Thermal dye sublimation printers, for example, as well as slide recorders, and electrophotographic printers, etc., can all be driven as recording units with two or more levels. The thresholding operation in Fig. 3 is then implemented using multiple, incremental, thresholds. The halftone value is then dependent upon the specific threshold value range in which the modified contone pixel value lies. For reasons of performance and flexibility, it is best to implement the thresholding operation in block 40 by a LUT of which the address values correspond to the sum of the error and the pixel values, while the contents are the corresponding halftone values.

In another variation, the error that is obtained from the difference between the modified contone pixel and the halftoned pixel value, may, instead of being propagated only to the next pixel in the order of processing, dispersed to more than one of the unprocessed pixels.

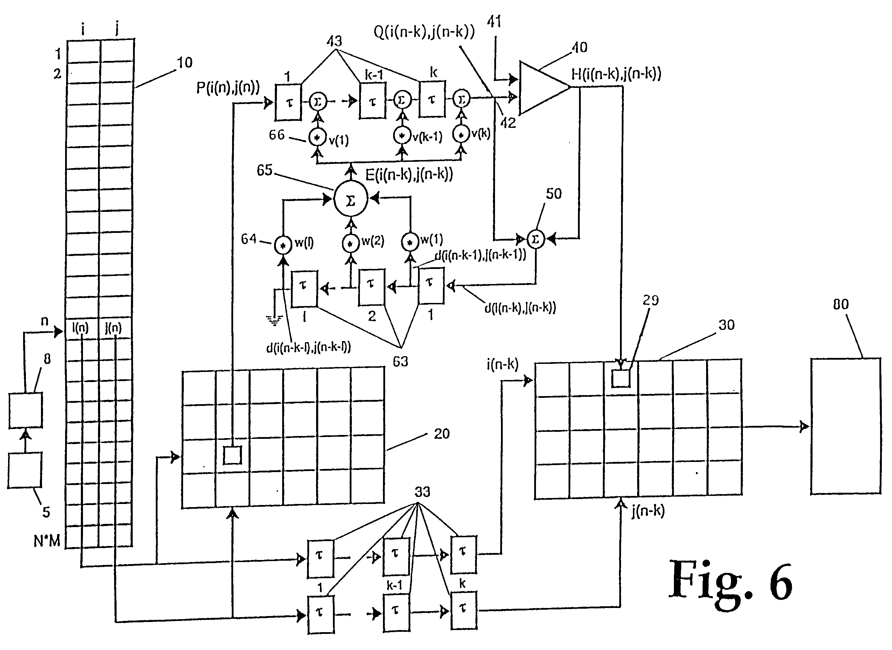

Yet, another variation is obtained when the error E in Fig. 3 is not obtained from the difference between the current modified pixel P(i(n), j(n)) and the halftoned value H(i(n), j(n)) of the current pixel, but when it is obtained as a weighted average from the errors of more than one processed pixel. A circuit to do this is shown in Fig. 6.

The circuit of Fig. 6 is a more elaborate version of that shown in Fig. 3. The difference lies in the addition of a first set of k shift registers 43 through which the unprocessed pixels are k times delayed, a second set of L shift registers 63 through which the difference values between the contone and halftoned values are L times delayed, and a third set of k shift registers 33 through which the coordinate values that address the halftone memory 30 are k times delayed. In addition there is an arithmetic unit 65 to obtain a weighted average E(i(n-k), j(n-k)) from the output of the sift registers 63 and to distribute this average to the outputs of the k shift registers 43.

At every cycle of clock 5, the data in the shift registers 33, 43, and 63 is shifted by one position, and the counter 8 is incremented by one. This is followed by three global operations referred to as HALFTONING, ERROR SYNTHESIS, and ERROR DISPERSION, to be explained in the following discussion.

In the HALFTONING operation, the new value of the counter 8 addresses the coordinate pair (i(n), j(n)) in the memory block 10, which in turn addresses the pixel P(i(n), j(n)) in the pixel memory 20. The latter value is applied at the input of the shift register 43. At the output of the same shift register 43 resides at that time a value Q(i(n-k), j(n-k)) 42, which is based upon (but not necessarily equal to) the k-times delayed pixel value P(i(n-k), j(n-k)). This value Q(i(n-k), j(n-k)) is compared in comparator 40 with the threshold value 41, and based upon this comparison, a halftone value H(i(n-k), j(n-k)) is determined and written into a cell 29 with address i(n-k), j(n-k) of the halftone memory 30. The latter address is obtained by having delayed the address values coming from memory block 10 k times by means of the shift register 33.

In the ERROR SYNTHESIS operation, the difference d(i(n-k), j(n-k)) between value Q(i(n-k), j(n-k)) and H(i(n-k), j(n-k)) is calculated by means of the arithmetic unit 50, and applied at the input of the shift register 63. At the respective outputs of the L cells of shift registers 63 are found the difference values d(i(n-k-1), j(n-k-1)), d(i(n-k-2), j(n-k-2)), ..., to d(i(n-k-1), j(n-k-1)). From these L values is synthesized, by means of the multipliers 64, with values w(1), w(2), ..., to w(L), and the arithmetic unit 65, the error value E(i(n-k), j(n-k)). This error value E(i(n-k), j(n-k)) represents a weighted average of the error introduced as a result of the quantization over the area of the 1 previously halftoned pixels.

The final operation, ERROR DISPERSION consists of the distribution of the error E(i(n-k), j(n-k)) to the unprocessed pixel values. This is done by first multiplying the error E(i(n-k), j(n-k)) with the previously-obtained weights 66, having values v(1), v(2), ..., to v(k), and by adding the multiplied values to the k respective outputs of the cells of shift register 43. In this way, the error E(i(n-k), j(n-k)) is dispersed over the area of k values in the shift registers 43.

It should be noted that the circuit of Fig. 6 can be modified by making provision for processing the image in bands in a manner similar to that described in Fig. 4.

Having described in detail a preferred embodiment of my invention, it will now be apparent to those skilled in the art that numerous modifications can be made therein without departing from the scope of the invention as defined in the following claims.

## Claims

1. A halftone screen comprising : A plurality of ERROR-DISPERSION-PROCESSED IMAGE PIXELS corresponding to a plurality of unprocessed image pixels of a continuous tone image, said unprocessed image pixels having been selected for ERROR-DISPERSION PROCESSING according to a RANDOMIZED, SPACE-FILLING, TWO-DIMENSIONAL CURVE.

2. The halftone screen of claim 1 wherein said RANDOMIZED, SPACE-FILLING, TWO-DIMENSIONAL CURVE is a fractal curve.

3. The halftone screen of claim 2 wherein said fractal curve is a Hilbert curve.

4. The halftone screen of claim 2 wherein said fractal curve is a Peano curve.

5. The halftone screen of claim 2 wherein at least a portion of said fractal curve is a Hilbert curve.

6. The halftone screen of claim 2 wherein at least a portion of said fractal curve is a Peano curve.

7. The halftone screen of claim 1 wherein said RANDOMIZED, SPACE-FILLING, TWO-DIMENSIONAL CURVE is tone-dependent with respect to the tone of at least some of said unprocessed image pixels.

8. The halftone screen of claim 1 wherein said RANDOMIZED, SPACE-FILLING, TWO-DIMENSIONAL CURVE is tone-dependent with respect to the tone of at least some of said processed image pixels.

9. The halftone screen of claim 7 wherein said RANDOMIZED, SPACE-FILLING, TWO-DIMENSIONAL CURVE has different tone dependencies in corresponding different portions of the curve.

10. The halftone screen of claim 8 wherein said RANDOMIZED, SPACE-FILLING, TWO-DIMENSIONAL CURVE has different tone dependencies in corresponding different portions of the curve.

11. A method for halftone screening a continuous tone image comprising the steps of :
(A) Selecting an unprocessed image pixel in said continuous tone image according to a RANDOMIZED, SPACE-FILLING, TWO-DIMENSIONAL CURVE;
(B) ERROR-DISPERSION PROCESSING said unprocessed image pixel; and,
(C) Repeating steps (A) and (B) until all image pixels in said continuous tone image are processed.

12. The method of claim 11 wherein said RANDOMIZED, SPACE-FILLING, TWO-DIMENSIONAL CURVE is a fractal curve.

13. The method of claim 12 wherein said fractal curve is a Hilbert curve.

14. The method of claim 12 wherein said fractal curve is a Peano curve.

15. The method of claim 12 wherein at least a portion of said fractal curve is a Hilbert curve.

16. The method of claim 12 wherein at least a portion of said fractal curve is a Peano curve.

17. The method of claim 12 wherein said RANDOMIZED, SPACE-FILLING, TWO-DIMENSIONAL CURVE is tone-dependent with respect to the tone of at least some of said unprocessed image pixels.

18. The method of claim 12 wherein said RANDOMIZED, SPACE-FILLING, TWO-DIMENSIONAL CURVE is tone-dependent with respect to the tone of at least some of said processed image pixels.

19. The method of claim 17 wherein said RANDOMIZED, SPACE-FILLING, TWO-DIMENSIONAL CURVE has different tone dependencies in corresponding different portions of the curve.

20. The method of claim 18 wherein said RANDOMIZED, SPACE-FILLING, TWO-DIMENSIONAL CURVE has different tone dependencies in corresponding different portions of the curve.
